# EUROPEAN PATENT SPECIFICATION

(11) **EP 2 915 599 B1**
(45) Date of publication and mention of the grant of the patent: **16.05.2018**
(21) Application number: 15157454.8
(22) Date of filing: 03.03.2015
(51) Int. Cl.: B08B 9/30, B65G 17/06, B65G 17/38, F26B 3/30, F26B 15/18

(54) **STATION INTENDED FOR A BOTTLING PLANT AND PROVIDED WITH AN IMPROVED CONVEYING LINE**
FÜR EINE FLASCHENABFÜLLANLAGE BESTIMMTE STATION MIT VERBESSERTEM FÖRDERBAND
STATION DESTINÉE À UNE USINE D'EMBOUTEILLAGE ET POURVUE D'UNE LIGNE DE TRANSPORT AMÉLIORÉE

(30) Priority: 03.03.2014 IT TO20140172
(43) Date of publication of application: 09.09.2015
(73) Proprietor: Cames S.r.l. Con Unico Socio, 12058 Santo Stefano Belbo (CN) (IT)
(72) Inventor: COLLA, Giovanni, 12058 Santo Stefano Belbo (CN) (IT)
(74) Representative: Robba, Pierpaolo

(56) References cited:
- EP-A1- 1 357 082
- EP-A1- 2 324 936
- US-A- 1 424 850
- US-A1- 2008 142 336

## Description

### Technical Field

The present invention relates to a station intended for a bottling plant and provided with an improved conveying line.

More particularly, the present invention finds application in washing stations, drying stations or temperature-conditioning stations for bottling plants.

### Prior Art

Bottling plants for large-scale productions usually comprise a series of automated apparatuses or stations in which the several steps of the bottling cycle, such as washing and drying the inside of the bottles, filling, corking or capping, washing and drying the outside of the bottles, labelling and packaging are performed.

Some of these steps require that the bottles spend, inside the corresponding station, a time long enough for the step that is being carried out to be completed with a satisfactory outcome.

For instance, in drying station the bottles must spend inside the station a time long enough to ensure complete removal of water droplets from the surface of the bottles.

Similarly, in temperature-conditioning stations the bottles must spend inside the station a time long enough to ensure that the bottles undergo the desired temperature increase.

In this kind of steps it is also important that all the bottles spend the same amount of time inside the corresponding station, so as to ensure homogeneous results.

In order to meet this requirement, stations for bottling plants were developed in the past in which bottles are advanced through the station in an aligned condition on a conveying line, for example a conveyor belt.

While they advance aligned on said conveying line, the bottles are subjected to the required step (washing, drying, temperature-conditioning, etc.).

Owing to the fixed aligned arrangement, the order of the bottles is kept during passage through the station and each bottle spends the same amount of time - possibly settable and adjustable - inside said station.

It is clear, however, that a rectilinear conveyor belt long enough to ensure an appropriate dwelling time of the bottles inside the station in order to complete the required operation would lead to a too large size of the apparatuses.

In order to overcome this drawback, stations for bottling plants have been developed in which the conveying line on which the bottles advance consists of a plurality of differently oriented consecutive sections that are joined to one another and form a meandering path inside the station.

More particularly, the conveying line may comprise a plurality of parallel sections in which each section advances in the opposite direction with respect to the adjacent sections, so as to form a zigzagging path inside the station.

In this way it is possible - while maintaining the same length of the path inside the station - to reduce the overall space requirements of the station.

By way of example, European patent application EP 1028300 describes a drying station in which the bottles advance aligned on a conveying line which follows a zigzagging path through drying means such as hot air flows.

Similarly, European patent application EP 1357041 describes a temperature-conditioning station in which the bottles advance aligned on a conveying line which follows a zigzagging path through heating means such as hot water jets.

However, solutions of this kind, though allowing to reduce the space requirements of stations for bottling plants with respect to a rectilinear conveying line, do not allow to effectively minimize the overall space requirements of such stations.

Indeed, the use of conveyor belts of known type on which aligned bottles are advanced involves the need to provide for very large curvature radiuses between the various sections of the conveying line, which results in unusable gaps of non-negligible size between said sections of said conveying line.

In EP 1357041 an attempt is made to overcome this drawback by providing a conveying line in which the various sections are made by separate rectilinear conveyor belts which are arranged mutually parallel and each of which advances in the opposite direction with respect to the adjacent conveyor belts; shaped guides are provided at the ends of said conveyor belts for causing transfer of the bottles from one conveyor belt to another, i.e. from a section of the conveying line to the following one.

The use of separate conveyor belts allows to reduce the curvature radius of the bottles upon changes of direction.

However, the need to cause transfer of the bottles from a conveyor belt to another may bring about some instabilities - or even falling - of said bottles; this limits the advancing speed of the bottles and increases the risks of malfunctioning.

EP 2 324 936 discloses a station for a bottling plant according to the preamble of claim 1 and comprising a working zone and a conveying line passing through said working zone, wherein said conveying line comprises a conveyor belt formed by a plurality of aligned slats and comprising a plurality of differently oriented sections providing for a meandering path in said working zone.

The main object of the present invention is therefore to overcome the above-mentioned drawbacks of the prior art by providing a station intended for bottling plants and provided with a conveying line that allows to minimize the space requirements of the station.

Another object of the present invention is to provide a station intended for a bottling plant and provided with a conveying line on which stability of the bottles during advancing through the station is ensured.

These and other objects of the invention are achieved by a station for bottling plants as defined in the appended claims.

### Summary of the Invention

A station for a bottling plant according to claim 1 is provided with a conveying line comprising a slat conveyor belt entrained in its movement by means of a chain, in which each slat of said conveyor belt is secured to the entraining chain in an offset manner both in the longitudinal direction of the conveyor belt and in the transverse direction relative to said conveyor belt with respect to the geometric centre of the slat.

This measure allows the conveyor belt to effect bends with small curvature radiuses.

Thanks to the fact that the structure of the conveyor belt of the conveying line allows to minimize the curvature radiuses upon the changes of direction of said conveyor belt, it is possible to minimize the gaps between the various sections of the conveyor belt and, consequently, the overall space requirements of the station.

Due to the fact that each bottle follows the whole path inside the station while always standing on the same slat, its stability during advancement is ensured.

Advantageously, the reduction of the space requirements of the station allows, among other things, to encase said station within a compact structure, thus reducing the noise pollution level in the environment in which the station is used.

The invention can be advantageously implemented in a large number of different stations in a bottling plant, such as for instance washing stations, drying stations, temperature-conditioning stations and so on. Taking into account that bottling plants usually include a large number of stations (intended for instance for washing, corking or capping, heating where required, washing, drying, labelling of bottles), it is apparent that minimization of the space requirements of each station is one of the focal points for each designer and that the present invention has therefore remarkable significance within the field.

### List of Drawings

Further characteristics and advantages of the present invention will become more apparent from the following detailed description of a preferred embodiment of the invention itself, given by way of non-limiting example with reference to the appended drawings, in which:
Figure 1 is a plan view of a station for a bottling plant according to the invention;
Figure 2 is a sectional view taken along the line A-A of Figure 1; and
Figure 3 is an enlarged view of the detail B of Figure 1.

### Detailed Description of a Preferred Embodiment

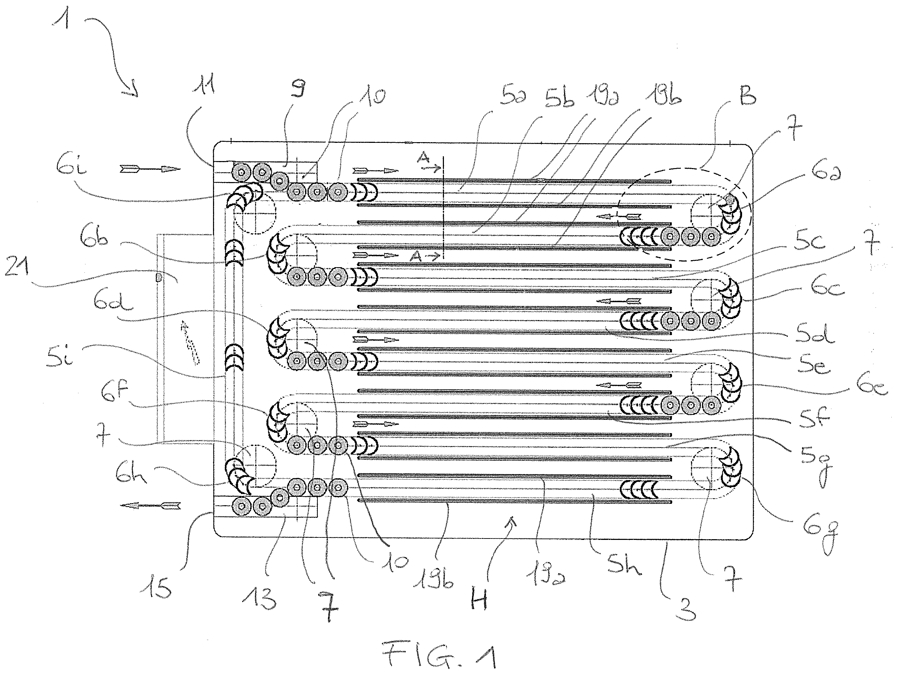

Referring at first to Figures 1 - 3 there is illustrated by way of example a station intended for the temperature-conditioning of bottles in a bottling plant and incorporating the present invention.

It is evident that this example is not to be intended as limiting and that the invention may as well be applied to other kinds of stations for bottling plants.

The station - indicated as a whole with reference numeral 1 - comprises an outer casing 3 having a substantially parallelepiped shape, comprising a base wall, side walls and an upper wall. Preferably, at least one of said walls is movable or comprises a movable element so as to allow access to the inside of the casing 3, for example for the purpose of carrying out maintenance or repair works.

Inside the casing 3 there is provided a working zone H - in this example in particular a heating zone - in which bottles 10 are advanced on a conveying line in a standing and aligned manner along a meandering path.

In the embodiment shown, the conveying line comprises a conveyor belt 5 consisting of a plurality of parallel sections 5a - 5h each of which advances in the opposite direction with respect to the adjacent sections, as shown by arrows in Figure 1.

To this aim, said sections 5a - 5h are joined to one another through junctions 6a - 6g enabling the conveyor belt to effect an angle of 180° around cylindrical guides 7.

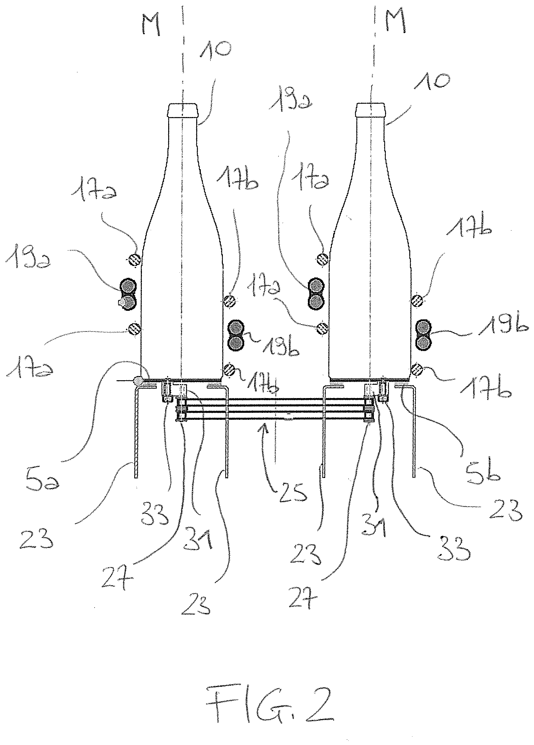

Pair of guides 17a, 17b (better visible in Figure 2) are provided on the opposite sides of each section 5a - 5h of the conveyor belt 5 for holding and guiding the bottles 10 during their advancing.

The distance of said guides 17a, 17b from the middle line M of the corresponding section of the conveyor belt - and consequently from each other - is preferably adjustable so that it can be adapted to bottles 10 of different diameter.

It is clear that the configuration described above is particularly advantageous - with the same distance covered by the bottles 10 inside the working zone H - for reducing the overall space requirements of the station 1. However, it is as much evident that such configuration is not be intended as limiting and that other configurations of the conveying line are possible.

For instance, the sections of the conveyor belt 5 may be oriented in a different manner, i.e. the junctions 6a - 6g may make said conveyor belt effect angles other than 180°.

Referring again to Figure 1, in the embodiment shown the conveying line is provided as a closed loop.

For this purpose, the conveyor belt 5 comprises a connecting section 5i which connects the distal end of the last section 5h of said conveyor belt 5 (with reference to the advancing direction of the bottles 10) to the proximal end of the first section 5a (still with reference to the advancing direction of the bottles 10), said connecting section 5i being connected to said first and last sections 5a, 5h of said conveyor belt 5 by means of junctions 6h, 6i.

Said junctions 6h, 6i guide the conveyor belt 5 around corresponding cylindrical guides 7 over a desired angle, corresponding to about 90° in the illustrated example.

Due to the fact that the conveyor belt 5 moves along a closed loop, the station 1 comprises an inlet conveyor belt 9, adjacent to the first section 5a of the conveyor belt 5 and extending through an inlet opening 11 of the casing 3: the bottles that are present on the conveying line of the bottling plant can be taken from said conveying line and moved onto the inlet conveyor belt 9; from there they are transferred, by means of appropriate means (not shown), onto the first section 5a of the conveyor belt 5.

Similarly, the station 1 comprises an outlet conveyor belt 13, adjacent to the last section 5h of the conveyor belt 5 and extending through an outlet opening 15 of the casing 3: the bottles, once they have passed though the working zone H, are transferred, by means of appropriate means (not shown), from the last section 5h of the conveyor belt 5 to the outlet conveyor belt 13 and from there they are subsequently taken and put again onto the conveying line of the bottling line.

It is to be noted that the closed loop configuration of the conveyor belt 5 of Figure 1 is not to be intended as limiting. It is indeed possible to provide, as an alternative, an open loop configuration in which the first section 5a of the conveyor belt 5 is prolonged to the outside of the inlet opening 11 of the casing 3 and, correspondingly, the last section 5h of the conveyor belt 5 is prolonged to the outside of the outlet opening 15 of the casing 3.

In any case, the conveying line is preferably defined so as to enable the bottles 10 to follow a meandering path substantially covering the entire area of the working zone H of the station 1, which allows to reduce the space requirements of the working zone H and, in the end, of the station 1. In order to minimize the space requirements of the working zone, the conveyor belt 5 has a structure that allows to minimize the curvature radius of the junctions 6a - 6g, thus allowing to reduce the distance between the various sections 5a - 5h of the conveyor belt 5.

In a manner known per se, the various sections 5a - 5h of the conveyor belt 5 are held by supports 23 mounted on the lower wall of the casing 3.

Under said supports 23, an actuating system 25 - consisting for instance of driven / idle pinions - transmits motion to a chain 27 which advances along a closed loop path and entrains the conveyor belt 5 along the same path. The conveyor belt 5 is formed by a plurality of mutually aligned slats 29 connected to the entraining chain 27 by means of supports 31 and pins 33, said slats 29 being secured to said entraining chain 27 in an offset manner - relative to the geometric centre of said slat - both in the longitudinal direction of the conveyor belt 5 and in the transverse direction with respect to said conveyor belt.

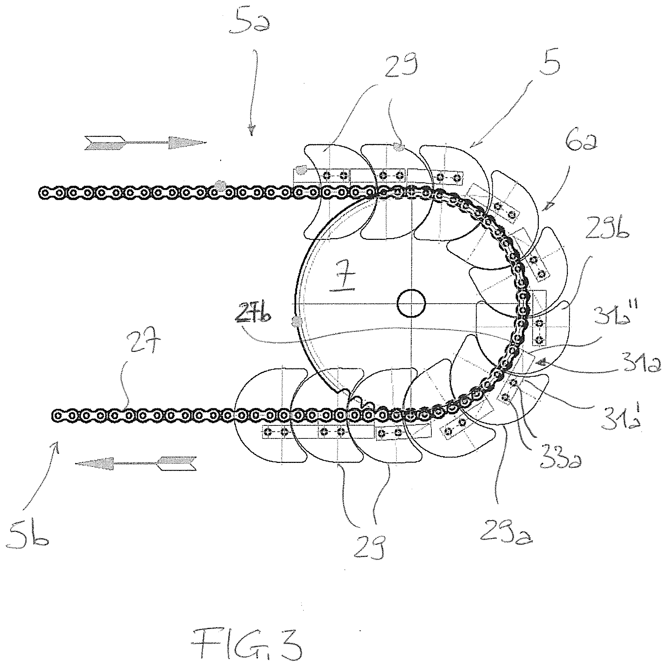

In other words, the slats 29 are secured to the chain 27 not at the middle line M of the conveyor belt 5, but in an offset position relative to said middle line; in addition, as is well visible in Figure 3, each slat 29 is secured to the chain 27 not at a mesh of said chain aligned with said slat, but at a mesh of said chain which is located in a backward position relative thereto with respect to the advancing direction of the chain 27 itself and of the conveyor belt 5 (indicated by arrows in Figure 3). Referring in particular to Figure 3, the slat 29a is secured to the chain 27 by means of a support 31a secured to the slat 29a by means of a pair of pins 33a.

The support 31a is secured to the slat 29a at an offset position relative to the middle line of the slat 29a itself, i.e. relative to the middle line M of the conveyor belt 5.

The support 31a has a substantially "L"-shaped configuration comprising a first limb 31a' extending parallel to the advancing direction of the conveyor belt 5 and in the opposite direction with respect to the advancing direction of the conveyor belt and a second limb 31a" which extends in a direction transverse to the advancing direction of the conveyor belt 5 and thus joins said first limb to the chain 27, namely to a mesh 27b of said chain.

As is apparent from Figure 3, the first limb 31a' of the support 31a has an extension such that the mesh 27b of the chain 27 to which the second limb 31a" of said support is joined is vertically aligned not with the slat 29a but with the slat 29b adjacent to said slat 29a and following it with respect to the advancing direction of the conveyor belt 5.

Thanks to this configuration, it is possible to vary the centre of instantaneous rotation of the slat 29a and delay rotation of the slat 29a concerned (joined to the mesh 27b of the chain 27 located at a backward position relative to said slat 29a) so that the latter is synchronized with the movement of the following slat 29b, thus preventing mutual interference of the slats 29a,29b during rotation. On the other hand, formation of gaps between a slat 29a and the following one 29b, which gaps would make unstable the position of the bottles 10 on the conveyor belt 5, is simultaneously prevented.

The advantage resulting therefrom consists in a further remarkable reduction of the dimensions of the station. As mentioned above, in the preferred embodiment provided by way of example herein, the illustrated station for a bottling plant is a temperature-conditioning station.

Consequently, heating means 19a,19b for heating the bottles 10 are provided in the working zone H.

In particular, in Figures 1 and 2 there are illustrated pairs of infrared lamps 19a, 19b arranged on the opposite sides of each section 5a - 5h of the conveyor belt 5, along the entire extension of said sections 5a - 5h in the working zone H.

Said infrared lamps 19a, 19b are preferably arranged parallel to the plane on which the conveyor belt 5 moves and at a small height above said plane, so that they are located at the lower part of the bottles 10, and even more preferably the infrared lamps 19a, 19b of each pair are arranged offset relative to each other, at different heights above the conveyor belt 5, in order to optimize the heating effect.

It will also be possible to provide mounting of said infrared lamps 19a, 19b on movable supports, whereby their distance from the middle line M of the conveyor belt 5 and/or their height above said conveyor belt 5 can be adjusted depending on the bottles to be heated.

As is visible in Figure 1, for housing the operating and controlling systems enabling to predetermine the performances of the infrared lights 19a, 19b, a cabinet 21 is associated to the outer casing 3 of the station 1.

Said cabinet 21 will also house the operating and controlling systems for the conveyor belt 5, allowing to adjust its advancing speed so that the desired time of advancement inside the station is adjusted each time.

Although reference has been made to a temperature-conditioning station, and more particularly to a temperature-conditioning station using infrared heating means, it is apparent that what has been described and illustrated in detail herein has been provided merely by way of example and that several variations and modifications are within the reach of a person skilled in the art without departing from the scope of protection defined by the appended claims. In particular, it is apparent that it would be possible to implement the invention in a temperature-conditioning station using a different kind of heating means in the working zone (or heating zone) H, such as for instance nozzles capable of ejecting jets of high temperature fluids.

Similarly, it will be possible to implement the invention in a drying station for bottles; in this case the working zone (or, in this case, the drying zone) H would provide for the presence of drying means along the conveying line in order to remove water droplets from the outer surface of the bottles.

For example, nozzles capable of ejecting hot air flows may be provided along the various sections of the conveying line of the station according to the invention.

Furthermore, it would be possible to implement the invention in a washing station for bottles; in this case the working zone (or, in this case, the washing zone) H would provide for the presence of washing means along the conveying line for removing impurities from the outer surface of the bottles. For example, nozzles capable of ejecting jets of cleaning fluids may be provided along the various sections of the conveying line of the station according to the invention.

## Claims

1. Station (1) for a bottling plant, comprising a casing (3), provided with an inlet opening (11) and an outlet opening (15), a working zone (H) being provided inside said casing, and a conveying line (9,5,13), which enters said casing through said inlet opening (11), passes through said working zone (H) and leaves said casing through said outlet opening (15), wherein said conveying line comprises a conveyor belt (5) formed by a plurality of aligned slats (29) and comprising a plurality of differently oriented sections (5a-5h) joined to one another through junctions (6a-6g), said sections providing for a meandering path in said working zone (H), **characterized in that** said conveyor belt (5) is entrained in its movement by means of a chain (27) driven by suitable driving means (25) and each of said slats (29) is secured to said entraining chain (27), with respect to the geometric centre of said slat, at a position that is both offset in the longitudinal direction of the conveyor belt (5) and offset in the transversal direction with respect to the conveyor belt (5), **and in that** each slat (29a) of said conveyor belt (5) is secured to said entraining chain (27) by means of a support (31a) secured to said slat (29a) through pins (33a) and wherein said support (31a) has a substantially "L"-shaped configuration comprising a first limb (31a') that, starting from said pins (33a), extends parallel to the advancing direction of said conveyor belt (5) and in the opposite direction with respect to the advancing direction of said conveyor belt (5), and a second limb (31a") that extends in a direction transversal to the advancing direction of said conveyor belt (5) and thus joins said first limb (31a') of said support (31a) to said entraining chain (27).

2. Station (1) according to claim 1, wherein each of said slats (29) is secured to said entraining chain (27) at a backward position in the longitudinal direction of the conveyor belt (5) with respect to the advancing direction of said conveyor belt.

3. Station (1) according to claim 1, wherein said first limb (31a') of said support (31a) has such an extension that it extends over two different, adjacent slats (29a,29b).

4. Station (1) according to any of the claims 1 to 3, wherein said conveyor belt (5) moves along a closed loop and it comprises a connecting section (5i) connecting the distal end of the last (5h) of said sections to the proximal end of the first (5a) of said sections and wherein said conveying line comprises an inlet conveyor belt (9), adjacent to said first section (5a) of said conveyor belt (5) and extending through said inlet opening (11) of said casing (3), and an outlet conveyor belt (13), adjacent to said last section (5h) of said conveyor belt (5) and extending through said outlet opening (15) of said casing (3).

5. Station (1) according to any of the claims 1 to 3, wherein said conveyor belt (5) moves along an open loop and wherein the first section (5a) of said conveyor belt (5) extends through said inlet opening (11) of said casing (3) and the last section (5h) of said conveyor belt (5) extends through said outlet opening (15) of said casing (3).

6. Station (1) according to any of the preceding claims, wherein said conveyor belt (5) comprises a plurality of parallel sections (5a-5h), each of which advances in the opposite direction with respect to the adjacent sections, said sections (5a - 5h) being joined to one another through 180° junctions (6a - 6g).

7. Station (1) according to any of the claims 1 to 6, wherein said station is a station for temperature-conditioning of bottles and wherein heating means (19a, 19b) for heating the bottles (10) are arranged along said sections (5a-5h) of said conveyor belt (5) in said working zone (H).

8. Station (1) according to any of the claims 1 to 6, wherein said station is a station for drying bottles and wherein drying means for drying the surface of the bottles (10) are arranged along said sections (5a-5h) of said conveyor belt (5) in said working zone (H).

9. Station (1) according to any of the claims 1 to 6, wherein said station is a station for washing bottles and wherein washing means for washing the surface of the bottles (10) are arranged along said sections (5a-5h) of said conveyor belt (5) in said working zone (H).

## Patentansprüche

1. Station (1) für eine Flaschenabfüllanlage, die ein Gehäuse (3) mit einer Einlassöffnung (11) und einer Auslassöffnung (15), eine Arbeitszone (H), die in dem Gehäuse vorgesehen ist, und eine Förderstrecke (9, 5, 13) aufweist, die durch die Einlassöffnung (11) in das Gehäuse eintritt, durch die Arbeitszone (H) verläuft und das Gehäuse durch die Auslassöffnung (15) verlässt, wobei die Förderstrecke ein Förderband (5) aufweist, das aus einer Vielzahl von hintereinander liegenden Lamellen (29) gebildet ist und eine Vielzahl unterschiedlich ausgerichteter Abschnitten (5a - 5h) aufweist, die miteinander durch Verbindungen (6a - 6g) verbunden sind, wobei die Abschnitte einen mäanderförmigen Pfad in der Arbeitszone (H) bilden,
**dadurch gekennzeichnet, dass** das Förderband (5) mittels einer Kette (27), die durch ein geeignetes Antriebsmittel (25) angetrieben ist, in seiner Bewegung mitgezogen wird, und jede Lamellen (29) an der Mitnahmekette (27) an einer Position bezüglich der geometrischen Mitte der Lamelle befestigt ist, die sowohl in der Längsrichtung des Förderbands (5) als auch in der Querrichtung in Bezug zum Förderband (5) angeordnet ist, und dass jede Lamelle (29a) des Förderbands (5) an der Mitnahmekette (27) mittels einer Stütze (31a) befestigt ist, die durch Stifte (33a) an der Lamelle (29a) gehalten ist und im Wesentlichen eine L-förmige Form aufweist, die einen ersten Schenkel (31a') aufweist, der sich von den Stiften (33a) ausgehend parallel zur Transportrichtung des Förderbands (5) und in die entgegengesetzte Richtung zur Transportrichtung des Förderbands (5) erstreckt, und einen zweiten Schenkel (31a") aufweist, der sich quer zur Transportrichtung des Förderbands (5) erstreckt und somit den ersten Schenkel (31a') der Stütze (31a) mit der Kette (27) verbindet.

2. Station (1) nach Anspruch 1, wobei jede der Lamellen (29) an der Mitnahmekette (27) an einer hinteren Position in der Längsrichtung des Förderbands (5) bezüglich der Transportrichtung des Förderbandes befestigt ist.

3. Station (1) nach Anspruch 1, wobei der erste Schenkel (31a') der Stütze (31a) so dimensioniert ist, dass er sich über zwei unterschiedliche, nebeneinanderliegende Lamellen (29a, 29b) erstreckt.

4. Station (1) nach einem der Ansprüche 1 bis 3, wobei sich das Förderband (5) entlang einer geschlossenen Schleife bewegt und einen Verbindungsabschnitt (5i) aufweist, der das ferne Ende des letzten (5h) der Abschnitte mit dem nahen Ende des ersten (5a) der Abschnitte verbindet, und wobei die Förderstrecke ein Einlassförderband (9) aufweist, das benachbart zum ersten Abschnitt (5a) des Förderbands (5) liegt und sich durch die Einlassöffnung (11) des Gehäuses (3) erstreckt, und ein Auslassförderband (13) aufweist, das benachbart zum letzten Abschnitt (5h) des Förderbands (5) liegt und sich durch die Auslassöffnung (15) des Gehäuses (3) erstreckt.

5. Station (1) nach einem der Ansprüche 1 bis 3, wobei sich das Förderband (5) entlang einer offenen Schleife bewegt und wobei sich der erste Abschnitt (5a) des Förderbands (5) durch die Einlassöffnung (11) des Gehäuses (3) und der letzte Abschnitt (5h) des Förderbandes (5) durch die Auslassöffnung (15) des Gehäuses (3) erstreckt.

6. Station (1) nach einem der vorhergehenden Ansprüche, wobei das Förderband (5) eine Vielzahl paralleler Abschnitte (5a - 5h) aufweist, von denen sich jeder in die entgegengesetzte Richtung in Bezug auf die angrenzenden Abschnitte fortbewegt, wobei die Abschnitte (5a - 5h) durch 180°-Verbindungen (6a - 6g) miteinander verbunden sind.

7. Station (1) nach einem der Ansprüche 1 bis 6, wobei die Station eine Station zur Temperierung von Flaschen ist und wobei Heizmittel (19a, 19b) zum Erwärmen der Flaschen (10) entlang der Abschnitte (5a - 5h) des Förderbands (5) in der Arbeitszone (H) angeordnet sind.

8. Station (1) nach einem der Ansprüche 1 bis 6, wobei die Station eine Station zum Trocknen von Flaschen ist und wobei Trockenmittel zum Trocknen der Oberfläche der Flaschen (10) entlang der Abschnitte (5a - 5h) des Förderbands (5) in der Arbeitszone (H) angeordnet sind.

9. Station (1) nach einem der Ansprüche 1 bis 6, wobei die Station eine Station zum Waschen von Flaschen ist und wobei Waschmittel zum Waschen der Oberfläche der Flaschen (10) entlang der Abschnitte (5a - 5h) des Förderbands (5) in der Arbeitszone (H) angeordnet sind.

## Revendications

1. Station (1) pour une usine d'embouteillage, comprenant une enceinte (3), munie d'une ouverture d'entrée (11) et d'une ouverture de sortie (15), une zone de travail (H) étant prévue à l'intérieur de ladite enceinte, et une ligne de transport (9, 5, 13), qui entre dans ladite enceinte par ladite ouverture d'entrée (11), passe à travers ladite zone de travail (H) et quitte ladite enceinte par ladite ouverture de sortie (15), ladite ligne de transport comprenant une bande transporteuse (5) formée par une pluralité de lamelles (29) alignées et comprenant une pluralité de sections (5a-5h) orientées différemment, assemblées les unes aux autres par l'intermédiaire de jonctions (6a-6g), lesdites sections fournissant un trajet sinueux dans ladite zone de travail (H),
**caractérisé en ce que** ladite bande transporteuse (5) est entraînée dans son mouvement au moyen d'une chaîne (27) entraînée par des moyens d'entraînement (25) appropriés et chacune desdites lamelles (29) est fixée à ladite chaîne d'entraînement (27), par rapport au centre géométrique de ladite lamelle, au niveau d'une position qui est à la fois décalée dans la direction longitudinale de la bande transporteuse (5) et décalée dans la direction transversale par rapport à la bande transporteuse (5),
et **en ce que** chaque lamelle (29a) de ladite bande transporteuse (5) est fixée à ladite chaîne d'entraînement (27) au moyen d'un support (31a) fixé à ladite lamelle (29a) par l'intermédiaire d'axes (33a) et ledit support (31a) ayant une configuration sensiblement en forme de « L » comprenant une première branche (31a') qui, en partant desdits axes (33a), s'étend en parallèle à la direction d'avancement de ladite bande transporteuse (5) et dans la direction opposée par rapport à la direction d'avancement de ladite bande transporteuse (5), et une seconde branche (31a") qui s'étend dans une direction transversale à la direction d'avancement de ladite bande transporteuse (5) et assemble ainsi ladite première branche (31a') dudit support (31a) à ladite chaîne d'entraînement (27).

2. Station (1) selon la revendication 1, dans laquelle chacune desdites lamelles (29) est fixée à ladite chaîne d'entraînement (27) au niveau d'une position reculée dans la direction longitudinale de la bande transporteuse (5) par rapport à la direction d'avancement de ladite bande transporteuse.

3. Station (1) selon la revendication 1, dans laquelle ladite première branche (31a') dudit support (31a) a une extension telle qu'il s'étend sur deux lamelles différentes adjacentes (29a, 29b).

4. Station (1) selon l'une quelconque des revendications 1 à 3, dans laquelle ladite bande transporteuse (5) se déplace le long d'une boucle fermée et elle comprend une section de liaison (5i) reliant l'extrémité distale de la dernière (5h) desdites sections à l'extrémité proximale de la première (5a) desdites sections et dans laquelle ladite ligne de transport comprend une bande transporteuse d'entrée (9), adjacente à ladite première section (5a) de ladite bande transporteuse (5) et s'étendant à travers ladite ouverture d'entrée (11) de ladite enceinte (3), et une bande transporteuse de sortie (13), adjacente à ladite dernière section (5h) de ladite bande transporteuse (5) et s'étendant à travers ladite ouverture de sortie (15) de ladite enceinte (3).

5. Station (1) selon l'une quelconque des revendications 1 à 3, dans laquelle ladite bande transporteuse (5) se déplace le long d'une boucle ouverte et dans laquelle la première section (5a) de ladite bande transporteuse (5) s'étend à travers ladite ouverture d'entrée (11) de ladite enceinte (3) et la dernière section (5h) de ladite bande transporteuse (5) s'étend à travers ladite ouverture de sortie (15) de ladite enceinte (3).

6. Station (1) selon l'une quelconque des revendications précédentes, dans laquelle ladite bande transporteuse (5) comprend une pluralité de sections parallèles (5a-5h), chacune desquelles avance dans la direction opposée par rapport aux sections adjacentes, lesdites sections (5a-5h) étant assemblées les unes aux autres par l'intermédiaire de jonctions à 180° (6a-6g).

7. Station (1) selon l'une quelconque des revendications 1 à 6, dans laquelle ladite station est une station pour le conditionnement à température de bouteille et dans laquelle des moyens de chauffage (19a, 19b) pour chauffer les bouteilles (10) sont agencés le long desdites sections (5a-5h) de ladite bande transporteuse (5) dans ladite zone de travail (H).

8. Station (1) selon l'une quelconque des revendications 1 à 6, dans laquelle ladite station est une station pour sécher des bouteilles et dans laquelle des moyens de séchage pour sécher la surface des bouteilles (10) sont agencés le long desdites sections (5a-5h) de ladite bande transporteuse (5) dans ladite zone de travail (H).

9. Station (1) selon l'une quelconque des revendications 1 à 6, dans laquelle ladite station est une station pour laver les bouteilles et dans laquelle des moyens de lavage pour laver la surface des bouteilles (10) sont agencés le long desdites sections (5a-5h) de ladite bande transporteuse (5) dans ladite zone de travail (H).
